(19) Europäisches Patentamt
European Patent Office
Office européen des brevets

(11) **EP 1 796 299 A1**

(12) **EUROPEAN PATENT APPLICATION**
published in accordance with Art. 158(3) EPC

(43) Date of publication:
**13.06.2007 Bulletin 2007/24**

(51) Int Cl.:
*H04J 11/00* (2006.01)     *H04L 1/00* (2006.01)
*H04L 29/08* (2006.01)

(21) Application number: **05790566.3**

(22) Date of filing: **05.10.2005**

(86) International application number:
**PCT/JP2005/018442**

(87) International publication number:
**WO 2006/038653 (13.04.2006 Gazette 2006/15)**

(84) Designated Contracting States:
**DE FR GB**

(30) Priority: **07.10.2004 JP 2004295348**

(71) Applicant: **MATSUSHITA ELECTRIC INDUSTRIAL CO., LTD.**
**Osaka 571-8501 (JP)**

(72) Inventors:
• **HASHIMOTO, Kazunari**
**Matsushita Electric Industrial Co. Ltd**
**Chuo-ku, Osaka-shi, Osaka 540-6319 (JP)**

• **TAKAKUSAKI, Keiji**
**Matsushita Electric Industrial Co. Ltd**
**Chuo-ku, Osaka-shi, Osaka 540-6319 (JP)**

(74) Representative: **Grünecker, Kinkeldey,**
**Stockmair & Schwanhäusser**
**Anwaltssozietät**
**Maximilianstrasse 58**
**80538 München (DE)**

(54) **WIRELESS PACKET COMMUNICATION APPARATUS**

(57)     A wireless packet communication apparatus wherein the error correction performance can be improved to enhance the system throughput without wastefully abandoning padding data. In the wireless packet communication apparatus, a number-of-padding-data calculating part (113) calculates the number of padding data based on the modulation scheme, encoding rate and spreading rate that are control information. A padding data storing part (103) stores the parity bits that have been punctured by a puncturing part (102). If the amount of transport data as error-correction encoded does not reach a wireless band, a padding part (104) selects, from among the data stored in the padding data storing part (103), padding data to be used for making up for the shortage, in accordance with the number of padding data as calculated by the number-of-padding-data calculating part (113), and then pads the selected padding data to a predetermined position in the output data from the puncturing part (102).

100: TRANSMITTING APPARATUS

FIG.7

EP 1 796 299 A1

**Description**

Technical Field

The present invention relates to a wireless packet communication apparatus that transmits packets using radio.

Background Art

Conventionally, studies have been carried out with respect to wireless communication schemes which can achieve high-speed packet transmission aimed to reach, in a wireless communication system as well, a rate equal to the rate of 100Mbps obtained in a wire communication system. Inparticular, to cope with cellular systems such as portable phones and hot spots (isolated cells) such as wireless LAN, an MC-CDMA (Multicarrier-Code Division Multiple Access) scheme, which combines an OFDM (Orthogonal Frequency Division Multiplexing) scheme and a CDMA (Code Division Multiple Access) scheme, receives attention (for instance, refer to Non-patent document 1 and Non-patent Document 2). Further, an account is also given of a frame configuration method in a wireless communication method and a configuration method of HARQ (Hybrid Automatic Repeat Request) for achieving a high-speed packet transmission (for instance, refer to Non-patent Document 3 and Non-patent document 4).

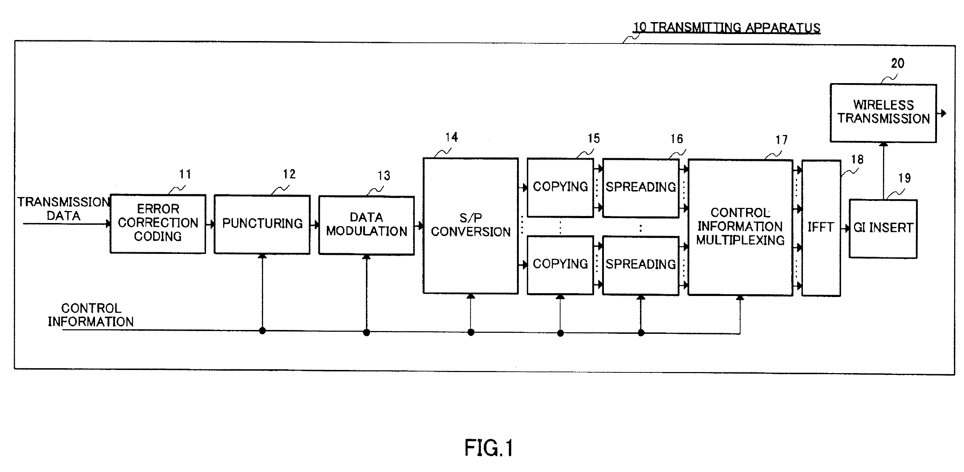

Next, a general description will be given on the operation of a transmitting apparatus and a receiving apparatus which carry out a high-speed wireless packet transmission using the MC-CDMA scheme. FIG.1 is a block diagram showing a configuration of the transmitting apparatus of a conventional wireless packet communication apparatus. In transmitting apparatus 10, error correction coding section 11 carries out error correction coding on transmission data. Puncturing section 12 carries out puncturing, in accordance with the coding rate, on the data outputted from error correction coding section 11. Data modulation section 13 carries out digital modulation, in accordance with the modulation scheme, on the data outputted from puncturing section 12. S/P conversion section 14 converts a serial signal outputted from data modulation section 13 into a parallel signal, in accordance with the spreading factor. Copying section 15 carries out data distribution, in accordance with the spreading factor, on the output signal of S/P conversion section 14. Spreading section 16 spreads the output signal of the copying section 15 in accordance with the spreading factor. Control information multiplexing section 17 multiplexes control information including the modulation scheme, coding rate, spreading factor and pilot signal, on the output signal of spreading section 16. IFFT (Inverse Fast Fourier Transform) section 18 carries an inverse Fourier transform on the output signal of control information multiplexing section 17. GI (Guard Interval) insert section 19 inserts a guard interval into the output signal of IFFT section 18. Wireless transmission section 20 converts the output signal of GI insert section 19 to a radio frequency, and transmits it from an antenna. Thus, a transmission signal of 1 packet is generated.

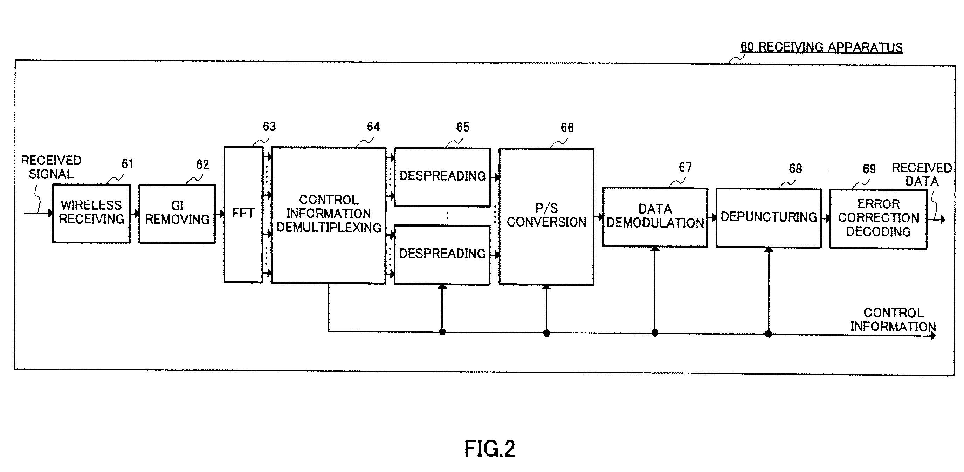

FIG.2 is a block diagram showing a configuration of the receiving apparatus of the conventional wireless packet communication apparatus. In receiving apparatus 60, radio receiving section 61 converts the signal received by the antenna into a baseband frequency. GI removing section 62 removes the guard interval from the output signal of radio receiving section 61. FFT (Fast Fourier Transform) section 63 carries out a Fourier transform on the output signal of GI removing section 62. Control information demultiplexing section 64 separates the control information such as modulation scheme, coding rate, spreading factor and pilot signal and the like from the output signal of FFT section 63. Despreading section 65 despreads the output signal of control information demultiplexing section 64. P/S conversion section 66 converts the parallel signal outputted fromdespreading section 65 into a serial signal. Data demodulation section 67 carries out digital demodulation on the output signal of P/S conversion section 66. Depuncturing section 68 carries out depuncturing, in accordance with the coding rate, on the data outputted from data demodulation section 67. Error correction decoding section 69 carries out error correction decoding on the data outputted from depuncturing section 68.

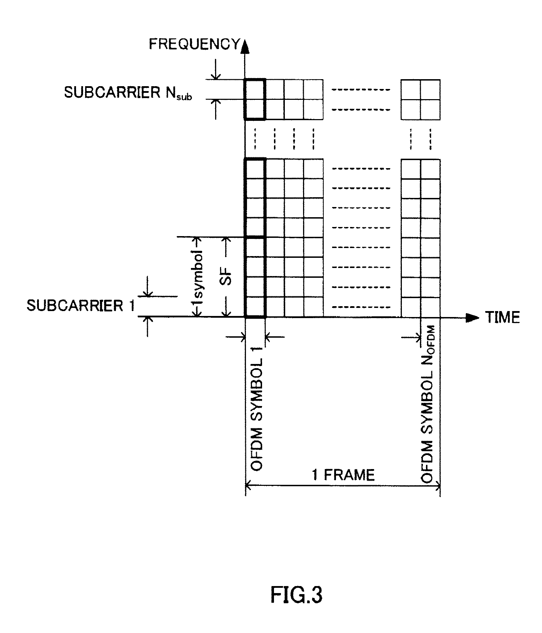

FIG.3 is a schematic diagram for explaining a format of transmission data in the transmitting apparatus of FIG. 1 and the receiving apparatus of FIG.2. FIG.3 shows the transmission symbols where the number of OFDM symbols for 1 frame in a radio period is $N_{OFDM}$ = 48, the number of subcarriers is $N_{SUB}$ = 768, the spreading factor at spreading in the frequency domain only is SF = 4, the digital modulation is QPSK (Quadrature Phase Shift Keying) modulation, and the coding rate in error correction coding is 1/2. In this case, in error correction coding section 11 of FIG.1, 9216 bits of information data are subjected to error correction coding at a coding rate of 1/2 to generate 18432 bits of coded data. Data modulation section 12 carries out QPSK modulation to generate 9216 symbol data. In S/P conversion section 13, the above symbol data are converted into parallel signals for every $N_{SUB}$/SF = 768/4 = 192 symbols. In copying section 14, SF = 4 data are copied per symbol, and a spreading code is applied to each of them. In this case, the number of information bits in one frame becomes 9216. In the MC-CDMA scheme which combines OFDM and CDMA, the data transmitting and receiving processing of data are carried out as described above.

Further, in the next-generation wireless communication systems, consideration is given to connection to the internet, and wireless transmission by using not the conventional circuit switching-type, but the packet switching-type is strongly encouraged. Next, a description will be given of the packet transmission method in the MC-CDMA scheme.

Here, the transmission data in one conventional frame is referred to as a "packet". In the packet switching-type, data is processed by setting a PDU (Protocol Data Unit) as the base unit. Also, the PDU is determined as an integral multiple of 8 bits (one byte or one octet). Here, an example is described in which one PDU = 141 octets. Also, since error detection is carried out in PDU units, a CRC of 16 bits is added to every PDU.

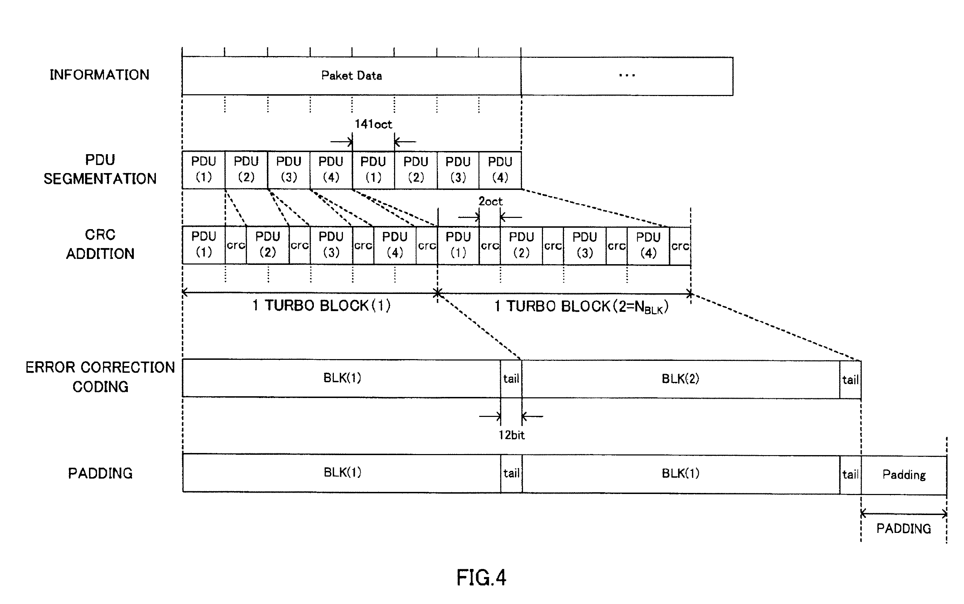

FIG.4 is a schematic diagram for explaining the format of transmission data before coding. This diagram shows the steps for generating transmission data and the data format thereof. Here, the number of PDUs included in one block of coding units in the turbo coding block is $N_{PDU}$, and the number of blocks included in one coded transmission data is $N_{BLK}$. Assuming that turbo coding is used for the error correction coding scheme and turbo code fits the 3GPP (3rd Generation Partnership Project: 3rd Generation Mobile Communication Systems), standard the maximum block size is 5114 bits, and 12 bits of tail bits are added to the coded data. In the case of coding data having a data size over 5114 bits, the data is divided equally to become 5114 bits or less. Since a CRC of 16 bits is added per PDU where one PDU = 141 octets (= 1128 bits), the transmission bits before coding become a multiple of 1144 (1128+16), and, since the maximum block size in turbo coding is 5114 bits, $N_{PDU}$ is 4 or less.

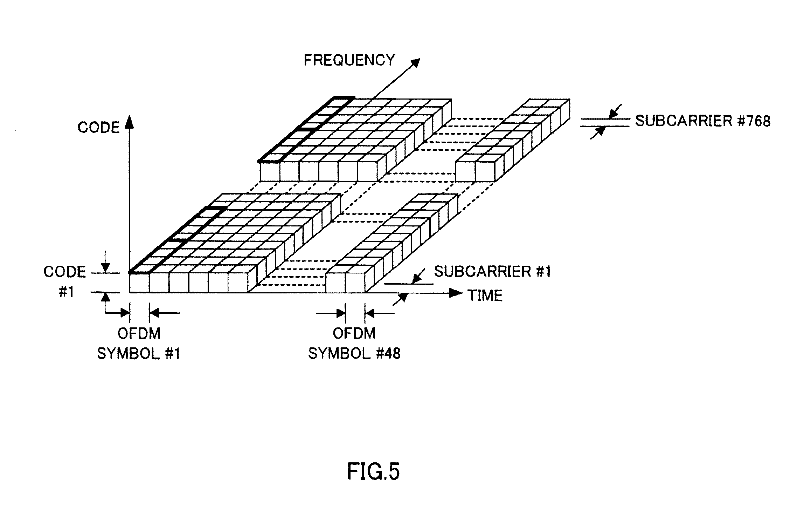

When the number of OFDM symbols in one packet is $N_{OFDM}$ = 48, the number of subcarriers $N_{SUB}$ = 768, and the number of multiplexed codes is $N_{CODE}$ = 1, spreading is carried out only in the frequency domain at a spreading factor SF = 4, the digital modulation is QPSK modulation (1 symbol = 2 bits), and the coding rate R in error correction coding is 1/2, the transmission signal is generated in the following steps. FIG.5 is a schematic diagram for explaining the format of one packet of multi carrier transmission signals. This diagram shows an image of the transmission packet at the time a transmission signal is generated. Since the number of OFDM symbols in one packet is $N_{OFDM}$ = 48 and the number of subcarriers is $N_{SUB}$ = 768, the maximum number of transmission chips per code is 36864 (= 48×768). Also, since the spreading factor is SF = 4, the maximum number of transmission symbols becomes 9216 (= 36864 ÷ 4). Also, since the digital modulation scheme is QPSK, there are 2 bits per 1 symbol, and the maximum number of transmission bits becomes 18432 (= 9216×2).

On the other hand, in turbo coding, if the coding rate is R = 1/2, $N_{PDU}$ = 4, $N_{BLK}$ = 2, one turbo coding output becomes 1144×$N_{PDU}$×1/R+12 = 9164 bits, and, since $N_{BLK}$ = 2, the number of all the transmission bits after turbo coding is 18328 (= 9164×2). Accordingly, the 104 bits (52 symbols) which represent the difference between the maximum number of transmission bits (18432 bits) and the number of all transmission bits after turbo coding (18328) are added as padding data.

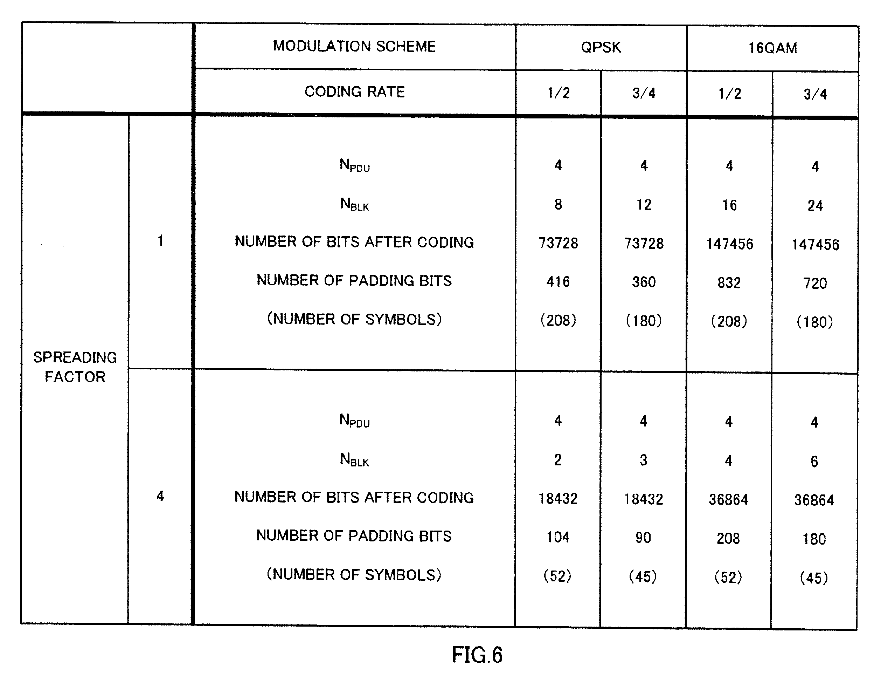

FIG.6 is a diagram for showing the amount of padding data in accordance with the modulation scheme, coding rate and spreading factor. This diagram shows a list of the amount of padding data per one code when the modulation scheme is QPSK and 16QAM (16 Quadrature Amplitude Modulation), the error correction coding rate is 1/2 and 3/4 and the spreading factor is 1 and 4.

Thus, since, in packet transmission, information before error correction coding is processed in PDU unit, data padding processing is performed to carry out an adjustment with the transmission capacity in the transmission radio band. Generally, zero padding, which inserts zeros carrying no meaning, to fit the transmission radio band and carry out wireless communication.

Non-patent Document 1:

Nikkei Electronics (October 7, 2002, pages 129-138).
Non-patent Document 2: "Comparison of Broadband Packet Wireless Access," Technical Report of the Institute of Electronics, Information and Communication Engineers, RCS 2000-136 (October 2000).
Non-patent Document 3: "Experiments on IP Packet Transmission Performance for Real Time Traffic Data Employing Adaptive Modulation and Channel Coding in Forward Link for VSF-OFCDM Broadband Wireless Access," Technical Report of the Institute of Electronics, Information and Communication Engineers, RCS 2003-129 (August 2003, pages 71-76)
Non-patent Document 4: "Comparison on Throughput Performance of Hybrid ARQ with Packet Combining in Forward Link OFCDM Broadband Packet Wireless Access," Technical Report of the Institute of Electronics, Information and Communication Engineers, RCS 2002-86 (June 2002, pages 67-72)

Disclosure of Invention

Problems to be Solved by the Invention

However, in the above-described conventional communication method, even with zero-padded data, a first modulation, second modulation, transmission processing and receiving processing are performed, and, furthermore, after demodulation processing is performed, the padding data is removed before error correction coding. Thus, in spite of these regular transmission and receiving processings, the removal of padding data adds nothing to data transmission.

In other words, the zero-padded data reduces the transmission efficiency on a radio channel, and causes wasteful power consumption.

The present invention is made in view of the above-mentioned problems, and it is therefore an object of the present invention to provide a wireless packet communication apparatus whereby error correction capability can be improved without wastefully discarding padding data to enhance the system throughput.

Means for Solving the Problem

In accordance with one aspect of the present invention, a wireless packet communication apparatus for transmitting a packet by radio is provided, and this apparatus employs a configuration having: a padding data amount calculation section that calculates an amount of padding data based on a modulation scheme, coding rate and spreading factor of the packet; a padding data storage section that stores part or all of data after error correction coding; and a padding section that, when the amount of transmission data after error correction coding falls short for a radio band, extracts selectively a required number of padding data to compensate for the shortage from the data stored in the padding data storage section, in accordance with the amount of padding data calculated by the padding data amount calculation section, and pads the padding data in a predetermined position in a transmission data sequence.

According to this configuration, by padding parity bits or systematic bits, which are redundant bits generated in error correction coding, in positions in the bit stream where conventionally zeros are padded, instead of zeros, the conventional transmission bit stream format does not change, so that it is possible to maintain continuity with the conventional packet transmission method and perform error correction decoding using padded parity bits or information bits. Thus, the redundancy and reliability of the transmission signal and received signal increase, so that it is possible to improve error correction capability and improve system throughput.

The wireless packet communication apparatus of the present invention employs a configuration, in which, in the above-described invention, when turbo code is used for error correction code and a decoding method using a sliding window in turbo decoding is employed, the padding section selects and pads the parity bits on a per sliding window width basis.

According to this configuration, when turbo code is employed for error correction code and turbo decoding is carried out using a sliding window algorithm, the parity bits that are punctured at bit periods corresponding to the siding window width are padded. Accordingly, it is possible to prevent a decrease in error correction capability in turbo decoding by the sliding window algorithm when the coding rate is high (close to 1), so that it is possible to improve system throughput.

The wireless packet communication apparatus of the present invention employs, in the above-described invention, wherein, when retransmission control is performed, the padding section selects and pads, for every retransmission, data that differs from data of a previous transmission. According to this configuration, the risk of transmitting redundant data is eliminated, so that data communication quality can be improved.

Advantageous Effect of the Invention

According to the present invention, with a wireless communication scheme for carrying out packet transmission, by padding systematic bits or parity bits subjected to error correction coding as padding data, the error correction capability can be improved without increasing transmission power, so that it is possible to realize wireless transmission at excellent transmission rates.

Brief Description of Drawings

FIG.1 is a block diagram showing a configuration of a conventional transmitting apparatus;
FIG.2 is a block diagram showing a configuration of a conventional receiving apparatus;
FIG.3 is a diagram for explaining a format of transmission data in the transmitting apparatus of FIG. 1 and a receiving apparatus;
FIG.4 is a diagram for explaining a format of transmission data before coding;
FIG.5 is a diagram for explaining a format of one packet of a multicarrier transmission signal;
FIG.6 is a diagram for showing the amount of padding data according to modulation scheme, coding rate and spreading factor;
FIG.7 is a block diagram showing a configuration of a transmitting apparatus of a wireless packet communication apparatus according to one embodiment of the present invention;
FIG.8 is a block diagram showing a configuration of a receiving apparatus of a wireless packet communication apparatus according to one embodiment of the present invention;

FIG.9 is a block diagram showing a configuration of a turbo coder;

FIG.10A shows puncturing pattern for explaining a puncturing method according to one embodiment of the present invention;

FIG.10B shows puncturing pattern for explaining a puncturing method according to one embodiment of the present invention;

FIG.11 is a diagram for explaining error correction coding and a puncturing method according to one embodiment of the present invention;

FIG.12 is a diagram for explaining a padding method according to one embodiment of the present invention;

FIG.13 is a diagram for explaining depadding and depuncturing methods according to one embodiment of the present invention;

FIG.14 is a diagram for explaining an initial value, terminal value in a trellis diagram and MAP decoding;

FIG.15 is a diagram for explaining a MAP decoding sequence not using a sliding window algorithm;

FIG.16 is a diagram for explaining a MAP decoding sequence using a sliding window algorithm;

FIG.17 is a diagram for explaining HARQ; and

FIG. 18 is a diagram for explaining a packet combining method according to an embodiment of the present invention.

Best Mode for Carrying Out the Invention

The present invention improves error correction capability and enhance system throughput in a wireless packet communication apparatus that carries out packet transmission by radio, by padding data to be used in error correction decoding, instead of conventional zero padding.

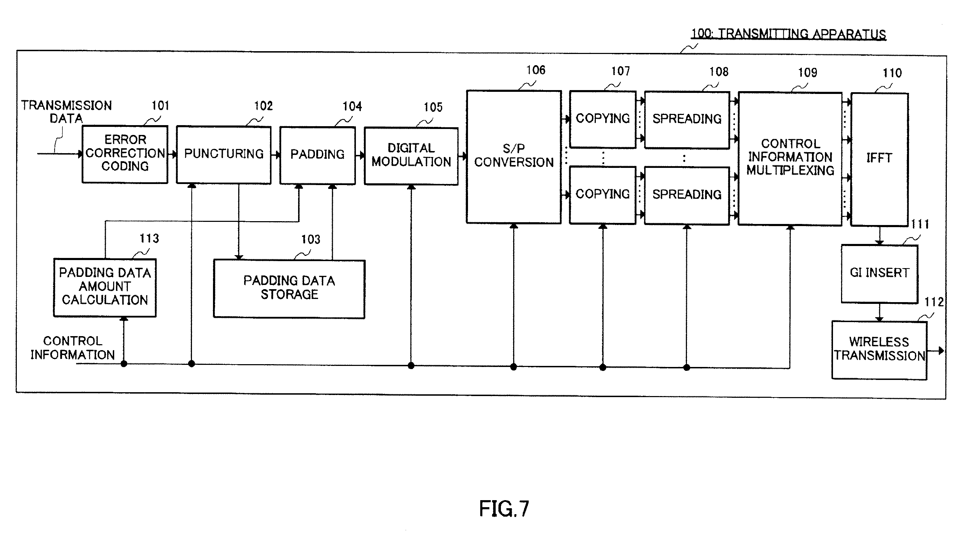

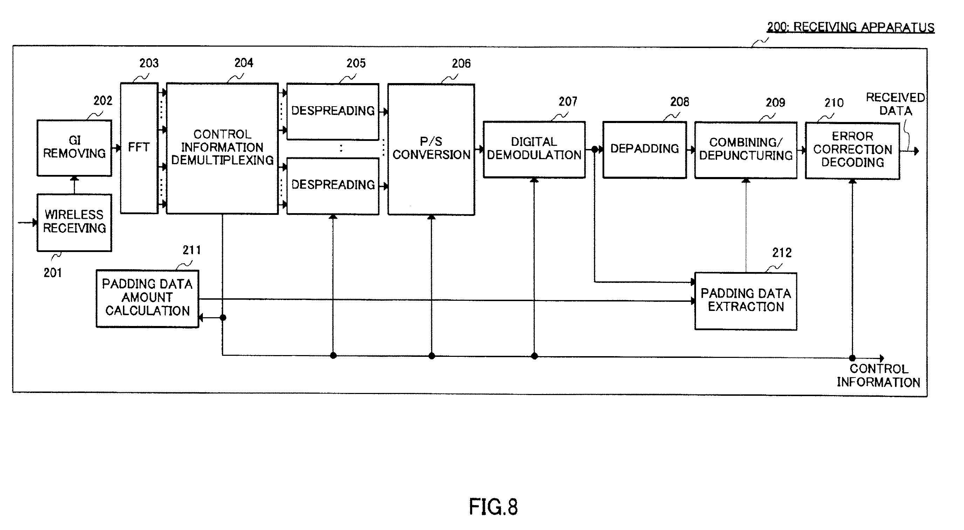

Now, an embodiment of a wireless packet communication method according to the present invention will be described in detail with reference to the drawings . FIG.7 is a block diagram showing a configuration of a transmitting apparatus of a wireless packet communication apparatus according to one embodiment of the present invention. FIG. 8 is a block diagram showing a configuration of a receiving apparatus of a wireless packet communication apparatus according to one embodiment of the present invention.

Transmitting apparatus 100 shown in FIG.7 is mainly comprised of error correction coding section 101, puncturing section 102, padding data storage section 103, padding section 104, digital modulation section 105, S/P conversion section 106, copying section 107, spreading section 108, control information multiplexing section 109, IFFT section 110, GI insert section 111, wireless transmission section 112 and padding data amount calculation section 113.

Receiving apparatus 200 shown in FIG.8 is mainly comprised of radio receiving section 201, GI removing section 202, FFT section 203, control information demultiplexing section 204, despreading section 205, P/S conversion section 206, digital demodulation section 207, depadding section 208, combining/depuncturing section 209, error correction decoding section 210, padding data amount calculation section 211 and padding data extraction section 212.

Wireless packet communication is carried out between transmitting apparatus 100 shown in FIG.7 and receiving apparatus 200 shown in FIG.8. Next, a description will be given of a packet transmission method using the MC-CDMA scheme and having a variable transmission rate.

Error correction coding section 101 performs error correction coding on transmission data. In the following description, turbo code is employed for the error correction code used in the error correction coding section 101.

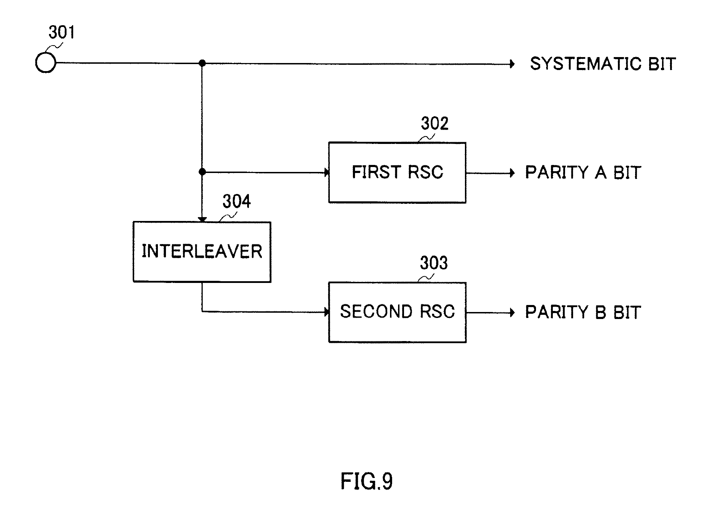

FIG.9 is a block diagram showing a configuration of a turbo coder. As shown in FIG.9, the turbo coder is comprised of first RSC (Recursive Systematic Convolutional coder) 302, second RSC (second Recursive Systematic Convolutional coder) 303 and interleaver 304. From the information data inputted from input terminal 301, total three bits are outputted, including a systematic bit which is outputted as is for each one bit input, a parity A bit subjected to convolutional coding by first RSC302, and parity B bit subjected to convolutional coding by second RSC 303 through interleaver 304. The coding rate in this case is 1/3.

Padding data amount calculation section 113 calculates the amount of padding data based on the packet modulation scheme, coding rate and spreading factor. For instance, if the modulation scheme is QPSK, coding rate is R = 1/2, and spreading factor is SF = 4, padding data amount calculation section 113 calculates that the number of padding bits per 1 code in a packet is 104 bits, as shown in FIG.6.

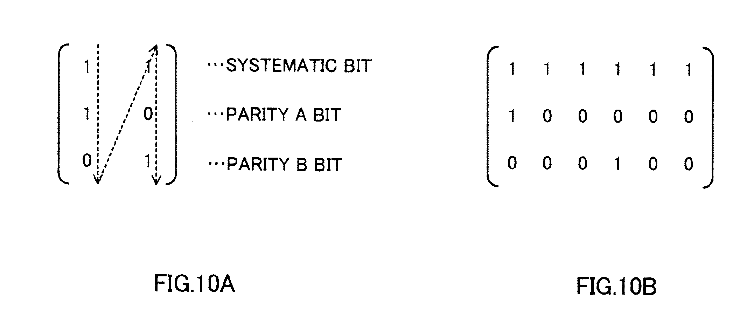

Puncturing section 102 performs puncturing, in accordance with the coding rate, on the data outputted from error correction coding section 101. FIG.10A shows puncturing pattern for explaining a puncturing method according to one embodiment of the present invention. Usually, puncturing at the coding rate R = 1/2 is shown by puncturing pattern shown in FIG.10A. In FIG.10A, "1" means not performing puncturing and "0" means performing puncturing. Also, the first line represents systematic bits, the second line represents parity A bits and the third line represents parity B bits, and the output bits stream after puncturing is outputted in a column-wise direction as shown by the dot-line arrows in the drawing.

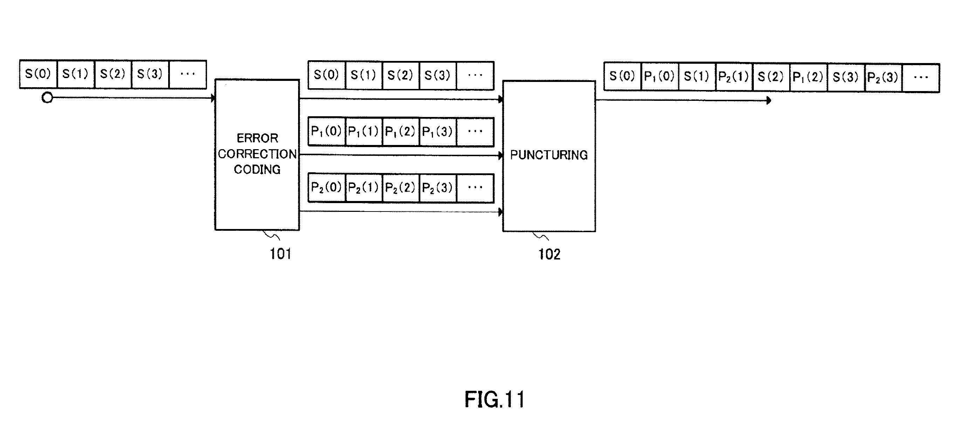

As an example, FIG.11 shows the puncturing output bits stream when the bit stream of information data before coding is [S(0), S(1), S(2), S(3)], the parity A bits generated by coding are [$P_1(0)$, $P_1(1)$, $P_1(2)$, $P_1(3)$], and parity B bits

are [$P_2(0)$, $P_2(1)$, $P_2(2)$, $P_2(3)$]. In other words, FIG. 11 is a diagram for explaining error correction coding and puncturing method according to one embodiment of the present invention. However, in FIG.11, the tail bits are not subjected to puncturing upon of turbo coding. For reference, FIG. 10B shows the puncturing pattern when the coding rate is R = 3/4. With such a puncturing method, error correction coded data is generated in accordance with the coding rate.

Padding data storage section 103 stores the parity bits punctured by puncturing section 102. When the amount of transmission data after error correction coding falls short for the radio band, padding section 104 selects, from among the data stored in padding data storage section 103, padding data to compensate for the shortage, in accordance with the amount of padding data calculated by padding data amount calculation section 113, and pads the padding data in predetermined positions in the output data from puncturing section 102.

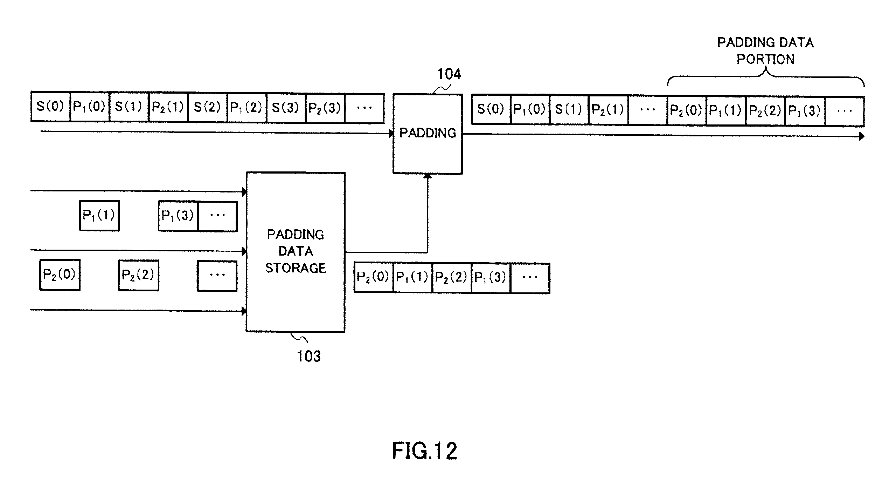

FIG.12 is a diagram for explaining a padding method according to one embodiment of the present invention. As for the selection method, FIG.12 shows a method of storing padding data starting from the head. Although not shown, the selection method may include a selection method for storing padding data starting from the back, or a selecting method for storing padding data so as to become uniform over the entire area. Also, in the case of adaptively switching padding data, a padding data switching signal is provided, as control information, for commanding the switching method.

Digital modulation section 105 digitally modulates the transmission bit stream generated by padding section 104, in accordance with modulation scheme. S/P conversion section 106 carries out S/P conversion of the output signal of digital modulation section 105. Copying section 107 performs data distribution to the output signal of S/P conversion section 106, in accordance with the spreading factor. Spreading section 108 spreads the output signal of copying section 107, in accordance with the spreading factor. Control information multiplexing section 109 multiplexes control information after +1 signals are allocated to the "0" bits and -1 signals are allocated to the "1" bits of the output signal of spreading section 108. IFFT section 110 performs inverse Fourier transform on the output signal of control information multiplexing section 109. GI insert section 111 inserts a guard interval into the output signal of IFFT section 110. Wireless transmission section 112 converts the output signal of GI insert section 111 to radio frequency and transmits it from an antenna.

In receiving apparatus 200 of FIG.8, radio receiving section 201 converts the signal received by the antenna to a baseband frequency. GI removing section 202 removes the guard interval from the output signal of radio receiving section 201. FFT section 203 performs a Fourier transform on the output signal of GI removing section 202. Control information demultiplexing section 204 separates the control information including the modulation scheme, coding rate, spreading factor and pilot signal from the output signal of FFT section 203. Despreading section 205 despreads the output signal of control information demultiplexing section 204. P/S conversion section 206 carries out P/S conversion of the output signal of despreading section 205. Digital demodulation section 207 digitally demodulates the output signal of P/S conversion section 206. Depadding section 208 removes the padding data portion from the data digitally demodulated by digital demodulation section 207. Padding data amount calculation section 211 calculates the amount of padding data based on the control information. Padding data extraction section 212 extracts the padding data from the data digitally demodulated by digital demodulation section 207. Combining/depuncturing section 209 performs combining/depuncturing, as pre-processing for error correction decoding, using the data digitally demodulated by digital demodulation section 207 and the padding data extracted by padding data extraction section 212. Error correction decoding section 210 performs error correction decoding on the output data of combining/depuncturing section 209. In this way, receiving apparatus 200 carries out a hard decision with the code bits such that the bit is "0" when a soft decision output value in the error correction decoding is positive and the bit is "1" when the soft decision output value is negative, and obtains received data.

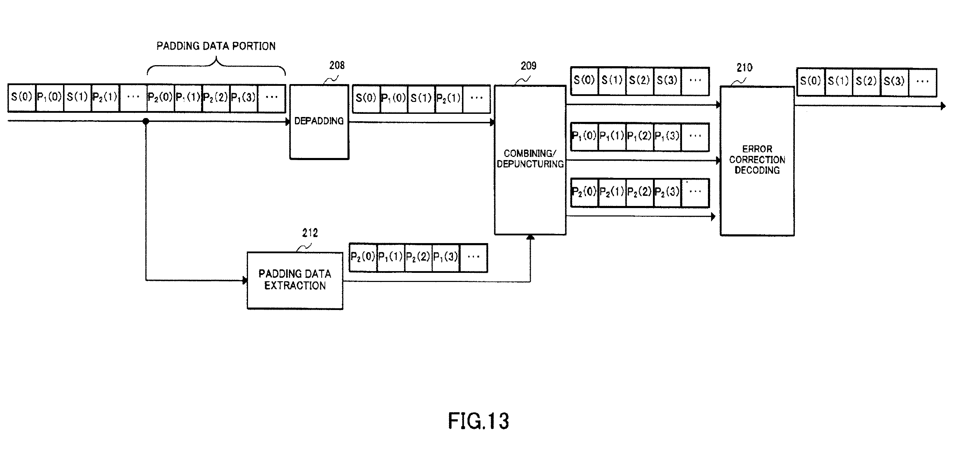

FIG.13 is a diagram for explaining a depadding and depuncturing method according to one embodiment of the present invention. Here, the operation of the depuncturing step is described using FIG.13. When receiving apparatus 200 receives a signal in which parity bits are padded by transmitting apparatus 100, depadding section 208 removes the padding data portion, and padding data extraction section 212 extracts the padding data only. From these two data, combining/depuncturing section 209 inserts the parity bits of padding data so as to have the same data sequence as at the time of error correction coding for the transmission side. With respect to the parity bit which has not been transmitted as padding data, zeros are inserted as NULL.

In this way, performing error correction decoding after combining/depuncturing processing is performed at combining/depuncturing section 209 is equivalent to reducing the coding rate by increasing the number of parity bits, which are redundant bits, instead of NULL values by zero padding, and error correction capability can be improved, so that it is possible to decrease the number of retransmissions and improve system throughput.

Also, MAP (Maximum A posteriori Probability) scheme is known as a representative decoding algorithm in turbo coding. In this MAP decoding method, a sliding window algorithm, by the use of which a reduction of the memory size and shortening of processing time are achieved, has been proposed and has come into practical use. According to the MAP decoding method, likelihood information (L) is determined, and a hard decision is made on this likelihood information (L) to obtain the decoding result. When the sliding window algorithm is not used, likelihood information (L) is calculated using the backward probability ($\beta$) determined from the backward direction on the time axis from the terminal state, based on a trellis diagram after all received signals have been received, the forward probability ($\alpha$) determined in

the forward direction from the initial state along the time axis, and the transition probability (γ) between states in the trellis diagram.

In other words, likelihood information (L) is calculated using the following equation 1.

$$L(\hat{u}_k) = \log \left( \frac{\sum\limits_{u_k=+1} \alpha_{k-1}(s_{k-1}) \cdot \beta_k(s_k) \cdot \gamma(s_{k-1}, s_k)}{\sum\limits_{u_k=-1} \alpha_{k-1}(s_{k-1}) \cdot \beta_k(s_k) \cdot \gamma(s_{k-1}, s_k)} \right) \quad \text{...(Equation 1)}$$

Here, $k$ shows the point in time, $s$ shows the state, $u_k$ shows the information at the point in time $k$, $\hat{u}_k$ shows the estimation value of $u_k$.

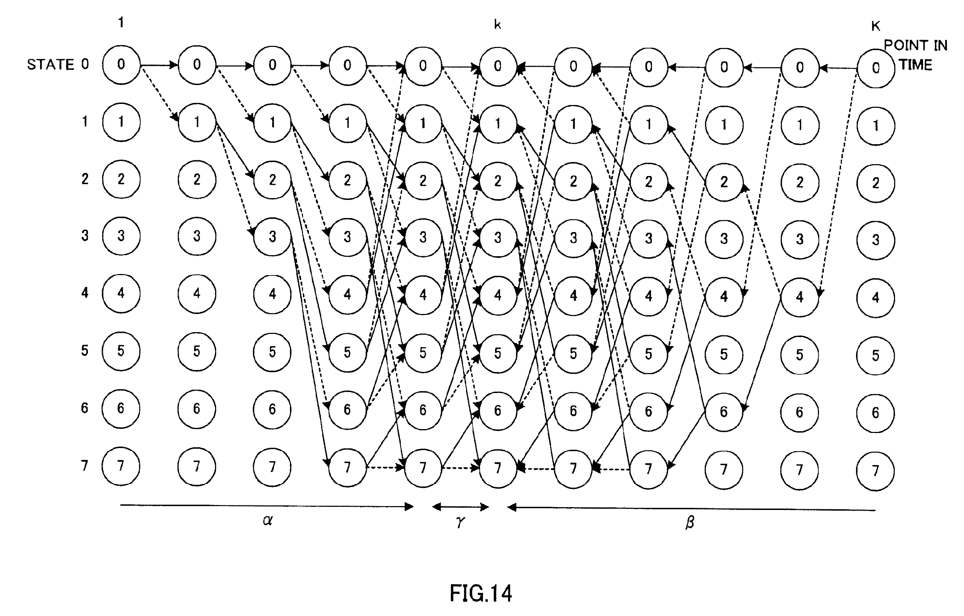

FIG.14 is a diagram for explaining an initial value, terminal value in a trellis diagram and MAP decoding. As shown in FIG.14, the terminal and initial state are set in advance to zero. In this case, since it is necessary to wait until the reception of all received signals is completed and store the forward probabilities (α) and backward probabilities (β) of all received signals, to calculate likelihood information (L), a large-capacity memory is required.

On the one hand, with the sliding window algorithm, an approach is taken in which the received signals are segmented by a certain window width, and the backward probability (β) is determined per window unit. Here, note that the initial state when the calculation of the backward probability (β) is started is unknown. For this reason, β training processing of calculating the backward probability (β) from the terminal direction is further required to determine the initial value for calculating the backward probability (β). In this way, the use of the sliding window algorithm makes it possible to start the decoding operation at the time when the signal at the time of starting β training is received, and it is sufficient to store the probabilities which include the forward probability (α) and backward probability (β) with respect to the received signals of the window width, it becomes possible to reduce the memory size.

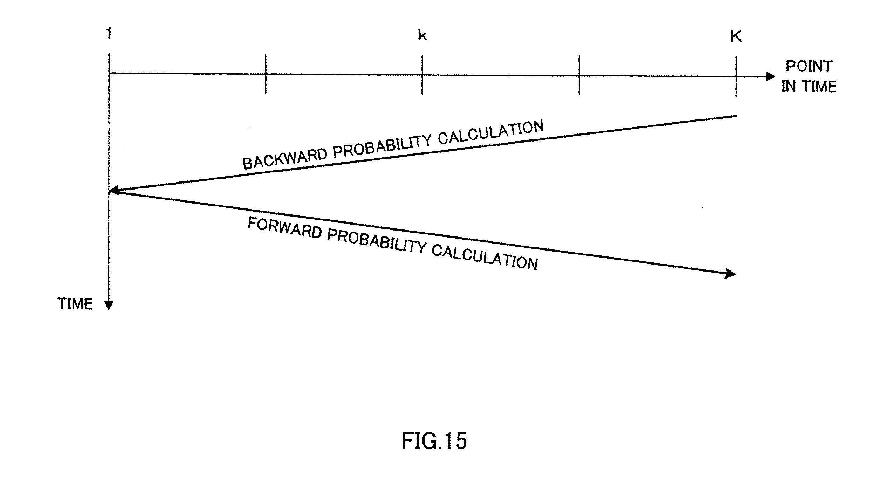

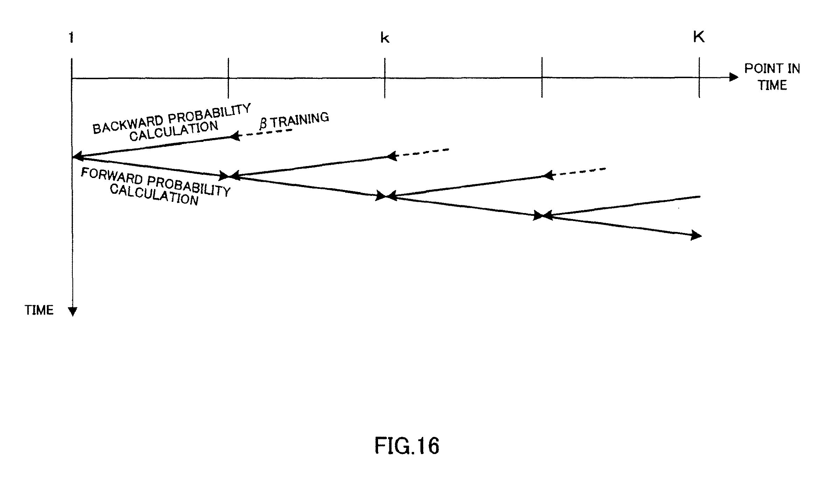

FIG.15 is a calculation flow diagram for explaining the MAP decoding sequence not using the sliding window algorithm. FIG.16 is a processing flow diagram for explaining the MAP decoding sequence using the sliding window algorithm.

Here, if the β training length is shortened, the initial value for calculating the backward probability (β) is not accurately determined, which leads to a decrease in the error correction capability. In particular, if the coding rate is high, since parity bits are punctured, the reliability of the state transition probability becomes low, and, therefore, the error correction capability is likely to be influenced by the β training length. If the β training length is made long, the accuracy of the initial value of the backward probability (β) increases. However, the effect that the calculation time is short, which represents the advantage of the sliding window algorithm, becomes weak.

Here, by selecting and transmitting the parity bits corresponding to the β training period as padding data, it is possible to accurately calculate the backward probability (β) even if the β training length is short and, maintain the error correction capability. In other words, when a decoding method using a sliding window is adopted in turbo decoding, by intensively selecting parity bits for every sliding window width and padding them, it is possible to achieve an error correction gain without increasing the training length, even when the coding rate is high.

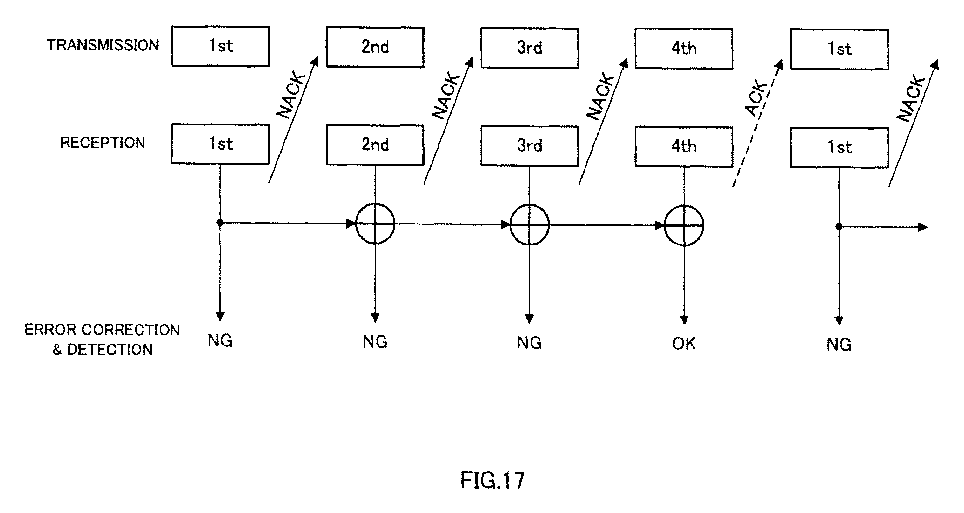

If a packet transmission error occurs when carrying out packet transmission, retransmission control is carried out to retransmit the same packet. HARQ which combines this retransmission control and error correction is being studied. FIG. 17 is a diagram for explaining HARQ. The following types of HARQ are researched: Type-I HARQ which is characterized in that error correction decoding is carried out after the previous transmission packet and the retransmission packet are symbol-combined; and IR (Incremental Redundancy) HARQ which is characterized in that a packet configured by parity bits that differ from the parity bits included in the earlier transmitted packets is retransmitted, and error correction decoding is carried out using both the parity bits included in the earlier received packets and the parity bits included in the packet received at the time of retransmission.

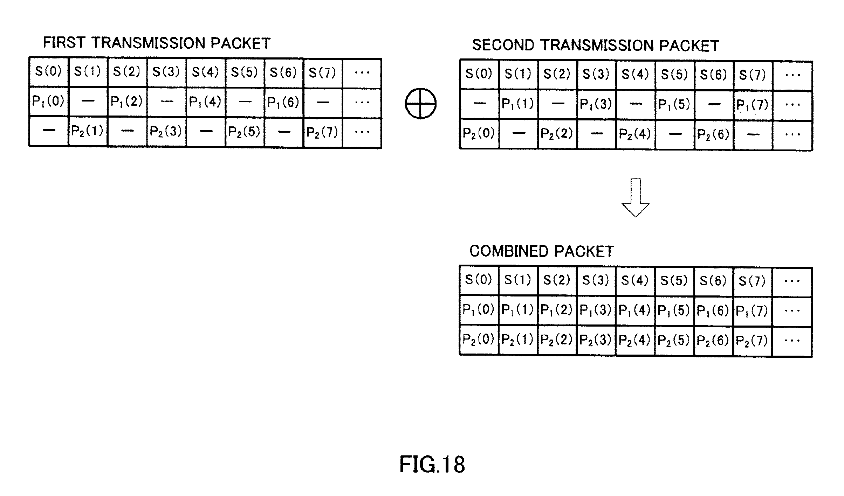

FIG.18 is a diagram for explaining a packet combining method according to one embodiment of the present invention. As shown in FIG.18, in the IR-type, the parity bits used for error correction decoding are incremented for every retransmission and a stronger coding sequence is obtained, which leads to an improvement of error correction capability at the receiving side. Thus, the received signals become error-free at a smaller number of retransmissions than ARQ which does not use error correction, thereby improving throughput.

Here, by padding parity bits that differ from the parity bits included in the earlier transmitted packets and retransmitting them as padding data, a larger number of parity bits are incremented and the redundancy of the signal increases, so that the error correction capability improves and throughput can be improved. The selection/switching of padding data is carried out by control information which shows the number of retransmissions. Also, by padding parity bits which are equivalent to the parity bits included in the earlier transmitted packets and retransmitting them as padding data, a diversity effect is achieved by diversity combining at the receiving side, the signal reliability improves, and the error correction capability improves, thereby improving system throughput.

Thus, according to the embodiment of the present invention, by calculating the amount of padding data from control information including the coding rate in error correction coding, digital modulation scheme, spreading factor, padding data switching information and the number of retransmissions, and selecting the padding method and padding systematic bits or parity bits and transmitting them, the redundancy of the transmission signal increases, and, consequently, error correction capability improves. Also, by retransmitting data which is not punctured as padding data and diversity-combining the same data at the receiving side, the reliability of the signal improves and the error correction capability improves. Further, by inserting padding data at positions where conventionally zeros are padded, it is possible to ensure connectivity with the conventional communication method.

Although a wireless packet communication apparatus and wireless packet communication system have been described with the above embodiment, the present invention can implement transmission packet generating apparatus and received packet processing apparatus equipped with the wireless packet communication apparatus of the above-described invention. Also, the present invention is applied to a program which causes a computer to execute the functions of the packet communication apparatus of the above-described invention, and to a storage medium which stores such a program.

The present application is based on Japanese Patent Application No.2004-295348, filed on October 7, 2004, the entire content of which is expressly incorporated by reference herein.

Industrial Applicability

The present invention is suitable for use in a wireless packet communication apparatus which caries out packet transmission using radio.

**Claims**

1. A wireless packet communication apparatus for transmitting a packet by radio, the apparatus comprising:

    a padding data amount calculation section that calculates an amount of padding data based on a modulation scheme, coding rate and spreading factor of the packet;
    a padding data storage section that stores part or all of data after error correction coding; and
    a padding section that, when the amount of transmission data after error correction coding falls short for a radio band, selects padding data to compensate for the shortage from the data stored in the padding data storage section, in accordance with the amount of padding data calculated by the padding data amount calculation section, and pads the padding data in a predetermined position in a transmission data sequence.

2. The wireless packet communication apparatus according to claim 1, wherein, when turbo code is used for error correction code and a decoding method using a sliding window in turbo decoding is employed, the padding section selects and pads the parity bits on a per sliding window width basis.

3. The wireless packet communication apparatus according to claim 1, wherein, when retransmission control is performed, the padding section selects and pads, for every retransmission, data that differs from data of a previous transmission.

4. A wireless packet communication method for transmitting a packet by radio, the method comprising the steps of:

    calculating an amount of padding data based on a modulation scheme, coding rate and spreading factor of the packet;
    storing part or all of data after error correction coding; and
    selecting, when the amount of transmission data after error correction coding falls short for a radio band, padding data to compensate for the shortage, from the stored data, in accordance with the calculated amount of padding data, and padding the padding data in a predetermined position in a transmission data sequence.

5. A program for implementing on a computer the steps of:

calculating an amount of padding data based on a modulation scheme, coding rate and spreading factor of the packet;

storing part or all of data after error correction coding; and

selecting, when the amount of transmission data after error correction coding falls short for a radio band, padding data to compensate for the shortage, from the stored data, in accordance with the calculated amount of padding data, and padding the padding data in a predetermined position in a transmission data sequence.

10 TRANSMITTING APPARATUS

FIG.1

FIG.2

FIG.3

INFORMATION — Paket Data · · ·

PDU SEGMENTATION — 141oct — PDU(1) PDU(2) PDU(3) PDU(4) PDU(1) PDU(2) PDU(3) PDU(4)

CRC ADDITION — 2oct — PDU(1) crc PDU(2) crc PDU(3) crc PDU(4) crc PDU(1) crc PDU(2) crc PDU(3) crc PDU(4) crc

1 TURBO BLOCK(1)   1 TURBO BLOCK($2=N_{BLK}$)

ERROR CORRECTION CODING — BLK(1) tail BLK(2) tail — 12bit

PADDING — BLK(1) tail BLK(1) tail Padding — PADDING

EP 1 796 299 A1

FIG.4

FIG.5

| | | MODULATION SCHEME | QPSK | | 16QAM | |
|---|---|---|---|---|---|---|
| | | CODING RATE | 1/2 | 3/4 | 1/2 | 3/4 |
| SPREADING FACTOR | 1 | $N_{PDU}$ | 4 | 4 | 4 | 4 |
| | | $N_{BLK}$ | 8 | 12 | 16 | 24 |
| | | NUMBER OF BITS AFTER CODING | 73728 | 73728 | 147456 | 147456 |
| | | NUMBER OF PADDING BITS | 416 | 360 | 832 | 720 |
| | | (NUMBER OF SYMBOLS) | (208) | (180) | (208) | (180) |
| | 4 | $N_{PDU}$ | 4 | 4 | 4 | 4 |
| | | $N_{BLK}$ | 2 | 3 | 4 | 6 |
| | | NUMBER OF BITS AFTER CODING | 18432 | 18432 | 36864 | 36864 |
| | | NUMBER OF PADDING BITS | 104 | 90 | 208 | 180 |
| | | (NUMBER OF SYMBOLS) | (52) | (45) | (52) | (45) |

FIG.6

100: TRANSMITTING APPARATUS

TRANSMISSION DATA → 101 ERROR CORRECTION CODING → 102 PUNCTURING → 104 PADDING → 105 DIGITAL MODULATION → 106 S/P CONVERSION → 107 COPYING → 108 SPREADING → 109 CONTROL INFORMATION MULTIPLEXING → 110 IFFT → 111 GI INSERT → 112 WIRELESS TRANSMISSION

103 PADDING DATA STORAGE

113 PADDING DATA AMOUNT CALCULATION

CONTROL INFORMATION

FIG.7

FIG.8

EP 1 796 299 A1

EP 1 796 299 A1

SYSTEMATIC BIT

FIRST RSC → PARITY A BIT

INTERLEAVER

SECOND RSC → PARITY B BIT

FIG.9

$$\begin{bmatrix} 1 & 1 \\ 1 & 0 \\ 0 & 1 \end{bmatrix}$$

···SYSTEMATIC BIT

···PARITY A BIT

···PARITY B BIT

**FIG.10A**

$$\begin{bmatrix} 1 & 1 & 1 & 1 & 1 & 1 \\ 1 & 0 & 0 & 0 & 0 & 0 \\ 0 & 0 & 0 & 1 & 0 & 0 \end{bmatrix}$$

**FIG.10B**

FIG.11

PADDING DATA
PORTION

104

| S(0) | P₁(0) | S(1) | P₂(1) | S(2) | P₁(2) | S(3) | P₂(3) | ··· |

PADDING

| S(0) | P₁(0) | S(1) | P₂(1) | ··· | P₂(0) | P₁(1) | P₂(2) | P₁(3) | ··· |

| P₁(1) | | P₁(3) | ··· |

PADDING
DATA
STORAGE

| P₂(0) | | P₂(2) | | ··· |

| P₂(0) | P₁(1) | P₂(2) | P₁(3) | ··· |

103

FIG.12

PADDING DATA PORTION

| S(0) | $P_1$(0) | S(1) | $P_2$(1) | $\cdots$ | $P_2$(0) | $P_1$(1) | $P_2$(2) | $P_1$(3) | $\cdots$ |

208 DEPADDING

| S(0) | $P_1$(0) | S(1) | $P_2$(1) | $\cdots$ |

209 COMBINING/ DEPUNCTURING

| S(0) | S(1) | S(2) | S(3) | $\cdots$ |

| $P_1$(0) | $P_1$(1) | $P_1$(2) | $P_1$(3) | $\cdots$ |

| $P_2$(0) | $P_2$(1) | $P_2$(2) | $P_2$(3) | $\cdots$ |

210 ERROR CORRECTION DECODING

| S(0) | S(1) | S(2) | S(3) | $\cdots$ |

212 PADDING DATA EXTRACTION

| $P_2$(0) | $P_1$(1) | $P_2$(2) | $P_1$(3) | $\cdots$ |

FIG.13

FIG.14

FIG.15

EP 1 796 299 A1

FIG.16

EP 1 796 299 A1

TRANSMISSION

| 1st | | 2nd | | 3rd | | 4th | | 1st |

RECEPTION

| 1st | | 2nd | | 3rd | | 4th | | 1st |

*NACK* *NACK* *NACK* *ACK* *NACK*

ERROR CORRECTION
& DETECTION

NG        NG        NG        OK        NG

FIG.17

FIRST TRANSMISSION PACKET

| S(0) | S(1) | S(2) | S(3) | S(4) | S(5) | S(6) | S(7) | ... |
|------|------|------|------|------|------|------|------|-----|
| $P_1(0)$ | — | $P_1(2)$ | — | $P_1(4)$ | — | $P_1(6)$ | — | ... |
| — | $P_2(1)$ | — | $P_2(3)$ | — | $P_2(5)$ | — | $P_2(7)$ | ... |

$\oplus$

SECOND TRANSMISSION PACKET

| S(0) | S(1) | S(2) | S(3) | S(4) | S(5) | S(6) | S(7) | ... |
|------|------|------|------|------|------|------|------|-----|
| — | $P_1(1)$ | — | $P_1(3)$ | — | $P_1(5)$ | — | $P_1(7)$ | ... |
| $P_2(0)$ | — | $P_2(2)$ | — | $P_2(4)$ | — | $P_2(6)$ | — | ... |

COMBINED PACKET

| S(0) | S(1) | S(2) | S(3) | S(4) | S(5) | S(6) | S(7) | ... |
|------|------|------|------|------|------|------|------|-----|
| $P_1(0)$ | $P_1(1)$ | $P_1(2)$ | $P_1(3)$ | $P_1(4)$ | $P_1(5)$ | $P_1(6)$ | $P_1(7)$ | ... |
| $P_2(0)$ | $P_2(1)$ | $P_2(2)$ | $P_2(3)$ | $P_2(4)$ | $P_2(5)$ | $P_2(6)$ | $P_2(7)$ | ... |

FIG.18

## INTERNATIONAL SEARCH REPORT

| International application No. |
|---|
| PCT/JP2005/018442 |

A. CLASSIFICATION OF SUBJECT MATTER
*H04J11/00*(2006.01), *H04L1/00*(2006.01), *H04L29/08*(2006.01)

According to International Patent Classification (IPC) or to both national classification and IPC

B. FIELDS SEARCHED

Minimum documentation searched (classification system followed by classification symbols)
*H04J11/00*(2006.01), *H04L1/00*(2006.01), *H04L29/08*(2006.01)

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X <br> A | JP 2003-244091 A (Victor Company Of Japan, Ltd.), <br> 29 August, 2003 (29.08.03), <br> Par. Nos. [0002], [0165] <br> (Family: none) | 1,4,5 <br> 2,3 |
| A | JP 09-275392 A (Denso Corp.), <br> 21 October, 1997 (21.10.97), <br> Par. Nos. [0009], [0011], [0012], [0015] <br> (Family: none) | 1-5 |
| A | JP 2001-223655 A (Lucent Technologies Inc.), <br> 17 August, 2001 (17.08.01), <br> Page 7, left column, lines 17 to 19 <br> & EP 1113607 A2     & CA 2326663 A1 <br> & US 6798791 B1 | 1-5 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 December, 2005 (26.12.05) | 10 January, 2006 (10.01.06) |

| Name and mailing address of the ISA/ <br> Japanese Patent Office | Authorized officer |
|---|---|
| Facsimile No. | Telephone No. |

Form PCT/ISA/210 (second sheet) (April 2005)

**INTERNATIONAL SEARCH REPORT**

| | International application No. |
|---|---|
| | PCT/JP2005/018442 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-532955 A  (Telefonaktiebolaget LM Ericsson(publ)), 02 October, 2002 (02.10.02), Par. No. [0016] & US 6553540 B1       & EP 1138135 A & WO 2000/035136 A1     & AU 1970500 A & BR 9915997 A       & CA 2353611 A & CN 1335001 A       & AU 758691 B & TW 525362 B | 1-5 |
| E,A | JP 2005-341440 A  (Toshiba Corp.), 08 December, 2005 (08.12.05), Par. Nos. [0003] to [0006] (Family: none) | 1-5 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004295348 A

**Non-patent literature cited in the description**

- *Nikkei Electronics,* 07 October 2002, 129-138
- Comparison of Broadband Packet Wireless Access. *Technical Report of the Institute of Electronics, Information and Communication Engineers, RCS 2000-136,* October 2000
- Experiments on IP Packet Transmission Performance for Real Time Traffic Data Employing Adaptive Modulation and Channel Coding in Forward Link for VSF-OFCDM Broadband Wireless Access. *Technical Report of the Institute of Electronics, Information and Communication Engineers, RCS 2003-129,* August 2003, 71-76
- Comparison on Throughput Performance of Hybrid ARQ with Packet Combining in Forward Link OFCDM Broadband Packet Wireless Access. *Technical Report of the Institute of Electronics, Information and Communication Engineers, RCS 2002-86,* June 2002, 67-72